# DEMANDE DE BREVET EUROPEEN

(11) **EP 0 778 175 A1**
(43) Date de publication de la demande: **11.06.1997**
(21) Numéro de dépôt: 96402625.6
(22) Date de dépôt: 04.12.1996
(51) Int. Cl.: B60N 3/10

(54) **Dipositif de rangement d'objets, notamment pour véhicle automobile**

(30) Priorité: 07.12.1995 FR 9514499
(71) Demandeur: ECIA - EQUIPEMENTS ET COMPOSANTS POUR L'INDUSTRIE AUTOMOBILE, F-25400 Audincourt (FR)
(72) Inventeur: Baume, Hugues, 25200 Montbeliard (FR)
(74) Mandataire: Habasque, Etienne Joel Jean-François

(57) **Abrégé**

Ce dispositif de rangement d'objets, notamment pour véhicule automobile, du type comportant un logement de réception d'objets (1) muni d'une lumière d'accès (2) et associé à un organe d'obturation (3) de la lumière d'accès, déplaçable entre une première position (A) d'obturation de cette lumière d'accès au logement et une seconde position (B) d'ouverture de cette lumière d'accès, est caractérisé en ce que le logement (1) et l'organe d'obturation (3) comprennent des moyens complémentaires (5) de maintien de l'organe d'obturation (3) dans au moins une position intermédiaire (C) entre la position d'ouverture et la position de fermeture de la lumière d'accès, pour présenter à l'utilisateur des moyens (6) de rangement d'objets prévus sur le côté (7) de l'organe d'obturation (3) dirigé vers le logement (1).

## Description

La présente invention concerne un dispositif de rangement d'objets notamment pour véhicule automobile.

On connaît déjà dans l'état de la technique, des dispositifs de rangement de ce type qui comportent un logement de réception d'objets muni d'au moins une lumière d'accès à ce logement, et associé à un organe d'obturation de cette lumière, déplaçable par exemple par un utilisateur, entre une première position d'obturation de la lumière d'accès au logement et une seconde position d'ouverture de cette lumière d'accès (voir par exemple les documents US-A-3 503 648 et US-A-4 902 061).

Cependant, la structure de ces dispositifs de rangement est telle qu'ils sont peu pratiques pour ranger certains objets tels que par exemple des boîtes de boisson ou autres, qui doivent être maintenus dans une position déterminée. La place disponible dans l'habitacle d'un véhicule automobile étant relativement limitée, il n'est pas toujours possible de prévoir dans ceux-ci des dispositifs spécifiquement adaptés pour assurer le rangement de ces objets.

Le but de l'invention est donc de résoudre ces problèmes.

A cet effet, l'invention a pour objet un dispositif de rangement d'objets, notamment pour véhicule automobile, du type comportant un logement de réception d'objets, muni d'une lumière d'accès et associé à un organe d'obturation de la lumière d'accès, déplaçable entre une première position d'obturation de cette lumière d'accès au logement et une seconde position d'ouverture de cette lumière d'accès, caractérisé en ce que le logement et l'organe d'obturation comprennent des moyens complémentaires de maintien de l'organe d'obturation dans au moins une position intermédiaire entre la position d'ouverture et la position de fermeture de la lumière d'accès, pour présenter à l'utilisateur des moyens de rangement d'objets prévus sur le côté de l'organe d'obturation dirigé vers le logement.

L'invention sera mieux comprise à la lecture de la description qui va suivre, donnée uniquement à titre d'exemple et faite en se référant aux dessins annexés, sur lesquels :
- la Fig.1 représente une vue schématique en coupe d'un exemple de réalisation d'un dispositif de rangement d'objets selon l'invention, dans laquelle un organe d'obturation est représenté dans trois positions différentes;
- la Fig.2 représente une vue en perspective de dessus d'un exemple de réalisation d'un organe d'obturation entrant dans la constitution d'un dispositif de rangement selon l'invention; et
- les Fig.3 à 10 représentent des vues schématiques en coupe illustrant le fonctionnement d'un tel dispositif de rangement.

Ainsi qu'on peut le voir sur ces figures, un dispositif de rangement d'objets selon l'invention est par exemple destiné à être utilisé dans un habitacle de véhicule automobile.

Ce dispositif comporte un logement de réception d'objets désigné par la référence générale 1 sur ces figures, muni d'au moins une lumière d'accès à ce logement désignée par la référence générale 2.

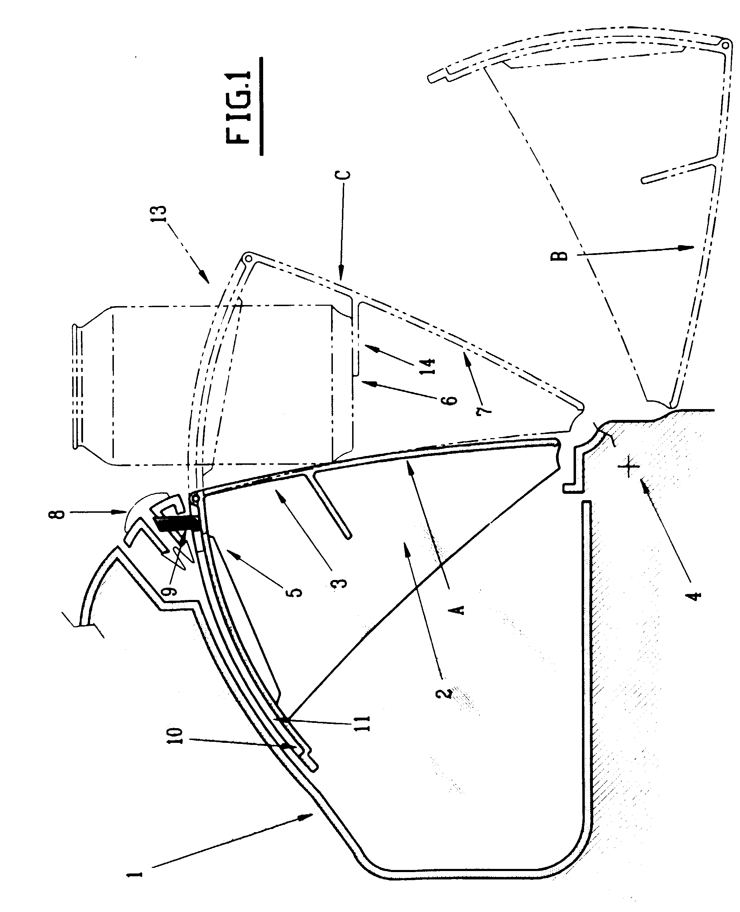

Ce logement et cette lumière d'accès sont associés à un organe d'obturation désigné par la référence générale 3 sur ces figures, se présentant par exemple sous la forme d'un volet, déplaçable par exemple par un utilisateur, entre une première position d'obturation de la lumière d'accès au logement, cette position d'obturation étant référencée par A sur la figure 1 et une seconde position d'ouverture de la lumière d'accès au logement, cette position d'ouverture étant référencée par B sur cette figure 1.

Cet organe d'obturation comporte à cet effet, par exemple dans sa partie inférieure, des moyens d'articulation de type classique, adaptés pour coopérer avec des moyens d'articulation complémentaires du logement, ces moyens d'articulation étant désignés par la référence générale 4 sur cette figure.

Selon l'invention, le logement 1 et l'organe d'obturation 3 comportent par exemple dans leur partie supérieure, des moyens complémentaires, désignés par la référence générale 5 sur ces figures, de maintien de l'organe d'obturation 3 dans au moins une position intermédiaire entre la position d'ouverture B et la position de fermeture A de la lumière d'accès au logement, pour présenter à l'utilisateur des moyens de réception et de rangement d'objets, prévus sur le côté de l'organe d'obturation dirigé vers le logement.

Cette position intermédiaire de l'organe d'obturation est référencée par C sur cette figure 1.

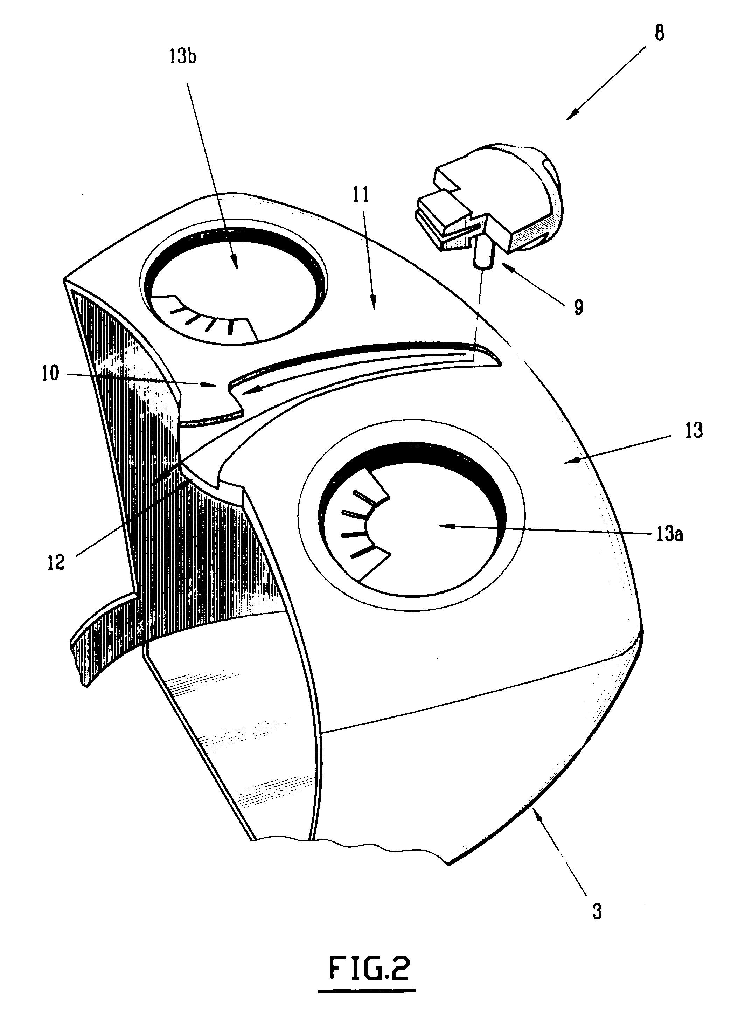

On peut constater sur cette figure 1 et sur la figure 2 que dans cette position intermédiaire C, des moyens de réception et de rangement d'objets désignés par exemple par la référence générale 6, prévus sur la face 7 de l'organe d'obturation dirigée vers le logement, sont présentés à l'utilisateur pour permettre à celui-ci de ranger des objets quelconques tels que des boîtes de boisson ou autres, dans ceux-ci.

On notera que différents modes de réalisation des moyens complémentaires de maintien de l'organe d'obturation dans cette position intermédiaire, peuvent être envisagés.

C'est ainsi par exemple que ces moyens de maintien peuvent être constitués par des moyens à franchissement de point dur ou à crans, de type classique, interposés entre le logement 1 et l'organe d'obturation 3 et permettant, lors du déplacement de cet organe d'obturation par l'utilisateur, de faire ressentir à celui-ci, le passage de l'organe d'obturation dans cette position intermédiaire.

Bien entendu, d'autres modes de réalisation de ces moyens de maintien en position peuvent être envisagés, comme celui représenté sur ces figures.

En effet, sur ces figures, ces moyens de maintien comprennent des moyens de butée escamotables par l'utilisateur, reliés à l'un des éléments, logement ou organe d'obturation, et adaptés pour coopérer avec des moyens de butée complémentaires de l'autre élément, organe d'obturation ou logement, pour maintenir l'organe d'obturation dans la position intermédiaire.

Dans l'exemple de réalisation représenté sur ces figures, le logement est muni dans sa partie supérieure d'un bouton de sélection 8 disposé dans des moyens de réception correspondants de ce logement et muni d'un pion de butée 9 adapté pour coopérer en position active, avec une surface de butée complémentaire 10 d'une gorge 11 de l'organe d'obturation pour délimiter ladite au moins une position intermédiaire de l'organe d'obturation.

Ce bouton de sélection 8 et ce pion de butée 9 sont montés déplaçables par L'utilisateur par exemple en rotation ou en translation, entre une première position active dans laquelle le pion de butée 9 est adapté pour coopérer avec la surface de butée complémentaire 10 de la gorge 11 de l'organe d'obturation, pour maintenir celui-ci en position intermédiaire et une seconde position escamotée en regard d'un passage 12 de cette gorge 11 débouchant du côté de l'organe d'obturation 3 dirigé vers le logement 1, pour permettre le déplacement par l'utilisateur, de cet organe d'obturation 3 vers sa position d'ouverture complète de la lumière d'accès au logement.

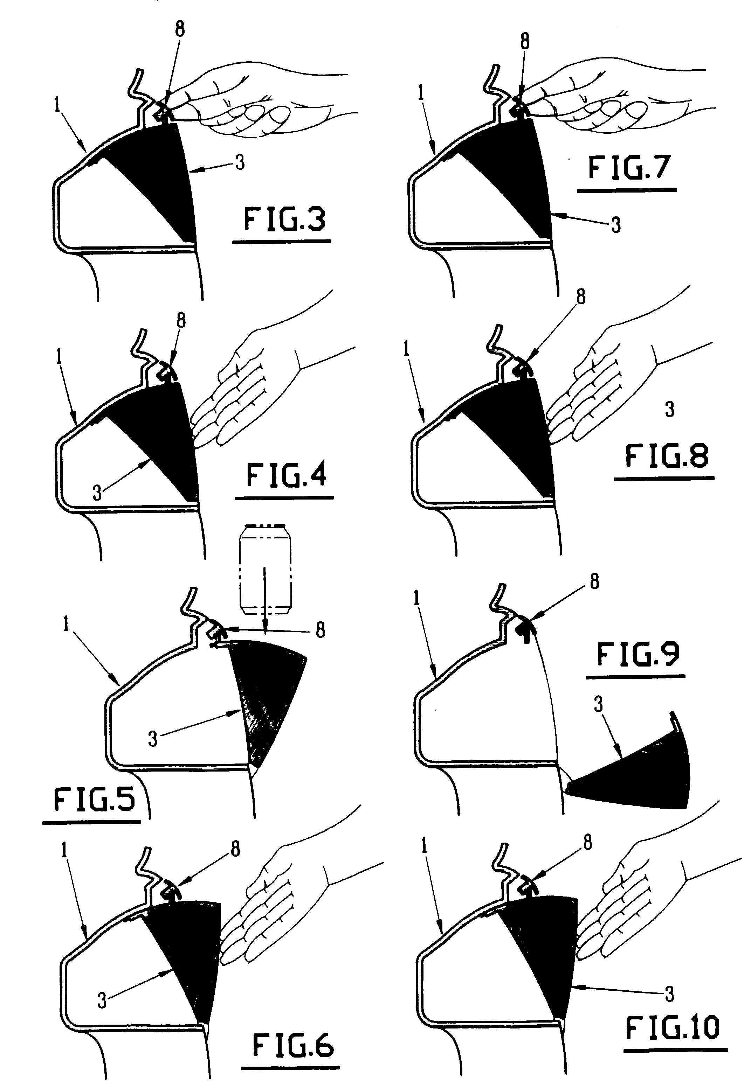

Ce fonctionnement est illustré sur les figures 3 à 10.

C'est ainsi par exemple que sur les figures 3 à 6, lorsque l'utilisateur déplace le bouton de sélection 8 et donc le pion de butée 9 vers leur position active, le déplacement de l'organe d'obturation 3 de sa position de fermeture vers sa position d'ouverture, est limité par la venue en appui du pion de butée 9 et de la surface de butée complémentaire 10 respectivement du bouton de sélection 8 porté par le logement et de la gorge 11 de l'organe d'obturation, ce qui permet de délimiter la position intermédiaire C de l'organe d'obturation comme cela est illustré sur la figure 5.

Dans cette position, les moyens de rangement d'objets 7 prévus sur le côté de l'organe d'obturation dirigé vers le logement, sont présentés à l'utilisateur pour lui permettre de ranger un objet quelconque, tel que par exemple une boîte de boisson ou autre.

A cet effet, ces moyens de rangement comprennent par exemple dans la partie supérieure de l'organe d'obturation, une paroi 13 dans laquelle est prévue la gorge 11 de cet organe et qui est munie de trous de réception 13a,13b de boîtes de boisson par exemple et d'un pied 14 sur lequel reposent ces boîtes.

Bien entendu, différents modes de réalisation de ces moyens de rangement peuvent être envisagés sur ce côté de l'organe d'obturation.

Après que l'utilisateur ait par exemple replacé l'organe d'obturation 3 dans sa position de fermeture de la lumière d'accès au logement, il peut déplacer le bouton de sélection 8 vers sa position escamotée de manière que la pion 9 soit en regard du passage 12 de la gorge 11 de l'organe d'obturation, pour permettre le déplacement de cet organe d'obturation vers sa position d'ouverture complète de la lumière d'accès au logement, comme cela est illustré par exemple sur la figure 9.

Il va de soi bien entendu que différents modes de réalisation de ce dispositif de rangement peuvent être envisagés, de même que différents modes de réalisation des moyens de rangement des objets prévus sur le côté de l'organe d'obturation dirigé vers le logement.

C'est ainsi par exemple que la commande du déplacement de l'organe d'obturation entre ses positions de fermeture et d'ouverture de la lumière d'accès au logement peut être assurée par différents moyens déjà connus dans l'état de la technique, et utilisant par exemple des moyens élastiques de sollicitation de l'organe d'obturation pour assurer une ouverture automatique de celui-ci à la suite d'une simple pression de l'utilisateur sur cet organe comme cela est illustré sur ces figures.

Ces moyens étant bien connus dans l'état de la technique, on ne les décrira pas en détail.

On notera également que les moyens de maintien en position intermédiaire de l'organe d'obturation peuvent être adaptés pour maintenir celui-ci dans plusieurs positions intermédiaires correspondant à plusieurs positions de l'organe d'obturation par rapport au logement.

Ceci est réalisé par exemple en prévoyant un bouton de sélection et un pion de butée correspondant déplaçables entre plusieurs positions de sélection possibles, le pion de butée de ce bouton de sélection étant alors adapté pour coopérer par exemple avec des surfaces de butée complémentaires de l'organe d'obturation, disposées en des emplacements différents d'une gorge ou autre de celui-ci pour permettre de délimiter ces différentes positions intermédiaires.

Dans l'exemple qui a été décrit précédemment, l'organe d'obturation comporte une paroi munie d'une gorge de déplacement du pion de butée du bouton de manoeuvre. Cette gorge comporte par exemple un passage évasé débouchant du côté de l'organe d'obturation dirigé vers le logement et une portion de butée, adaptés pour coopérer avec le pion de butée du bouton de sélection pour permettre le déplacement de cet organe d'obturation vers sa position d'ouverture ou sa position intermédiaire selon la position de ce pion de butée et donc du bouton de sélection.

Le passage évasé permet le déplacement de l'organe d'obturation vers sa position de fermeture de la lumière d'accès au logement quelque soit la position du pion du bouton de sélection, celui-ci étant remis automatiquement en position escamotée lors de cette fermeture.

Il va de soi bien entendu que d'autres modes de réalisation de ces moyens peuvent être envisagés.

On notera également que les moyens de rangement d'objets 7 peuvent être venus de matière avec le reste de l'organe d'obturation 3, par exemple en matière plastique.

## Revendications

1. Dispositif de rangement d'objets, notamment pour véhicule automobile, du type comportant un logement de réception d'objets (1) muni d'une lumière d'accès (2) et associé à un organe d'obturation (3) de la lumière d'accès, déplaçable entre une première position d'obturation (A) de cette lumière d'accès au logement et une seconde position (B) d'ouverture de cette lumière d'accès, caractérisé en ce que le logement (1) et l'organe d'obturation (3) comprennent des moyens complémentaires (5) de maintien de l'organe d'obturation (3) dans au moins une position intermédiaire (C) entre la position d'ouverture et la position de fermeture de la lumière d'accès, pour présenter à l'utilisateur des moyens (6) de rangement d'objets prévus sur le côté (7) de l'organe d'obturation (3) dirigé vers le logement.

2. Dispositif selon la revendication 1, caractérisé en ce que les moyens de maintien en position comprennent des moyens à franchissement de point dur interposés entre le logement (1) et l'organe d'obturation (3).

3. Dispositif selon la revendication 1, caractérisé en ce que les moyens de maintien en position comprennent des moyens de butée (8,9) escamotables par l'utilisateur, reliés à l'un des éléments, logement ou organe d'obturation, et adaptés pour coopérer avec des moyens de butée complémentaires (10) de l'autre élément, organe d'obturation ou logement.

4. Dispositif selon la revendication 3, caractérisé en ce que les moyens de butée escamotables (8,9) sont reliés au logement (1).

5. Dispositif selon la revendication 3 ou 4, caractérisé en ce que les moyens de butée comprennent un pion de butée (9) relié à un bouton de sélection (8) déplaçable entre une position active dans laquelle ce pion de butée est adapté pour coopérer avec une surface de butée complémentaire (10) de l'organe d'obturation pour délimiter ladite au moins une position intermédiaire de celui-ci et une position escamotée permettant le déplacement de l'organe d'obturation vers sa position d'ouverture de la lumière d'accès.

6. Dispositif selon la revendication 5, caractérisé en ce que le bouton de sélection (8) est porté par le logement et en ce que la surface de butée complémentaire (10) est formée dans une gorge (11) d'une paroi (13) de l'organe d'obturation.

7. Dispositif selon la revendication 6, caractérisé en ce que le pion de butée (9) et le bouton de sélection (8) sont déplaçables entre la position active en regard de la surface de butée (10) de la gorge (11) et la position escamotée en regard d'un passage (12) de la gorge débouchant du côté de l'organe d'obturation (3) dirigé vers le logement.

8. Dispositif selon l'une quelconque des revendications précédentes, caractérisé en ce que les moyens de rangement d'objets (7) comprennent des moyens de réception (13,14) d'au moins une boîte de boisson.
